# EUROPÄISCHE PATENTSCHRIFT

(11) **EP 1 382 633 B1**
(45) Veröffentlichungstag und Bekanntmachung des Hinweises auf die Patenterteilung: **10.10.2007**
(21) Anmeldenummer: 03015248.2
(22) Anmeldetag: 05.07.2003
(51) Int. Cl.: C08G 77/46, B01F 17/00, C09D 7/02, C09B 67/00

(54) **Verwendung organofunktionell modifizierter, Phenylderivate enthaltender Polysiloxane als Dispergier- und Netzmittel für Füllstoffe und Pigmente in wässrigen Pigmentpasten und Farb- oder Lackformulierungen**
Use of organofunctional modified polysiloxanes containing phenyl groups as dispersing and wetting agents for fillers and pigments in aqueous pigment pastes and coating or lacquer compositions
Utilisation de polysiloxanes organofonctionels, contenant des groupes phényle comme agents de dispersion et comme agents mouillants pour des charges et des pigments dans les compositions aqueuses de pigments et dans les compositions de revêtement ou d' émaillage

(30) Priorität: 19.07.2002 DE 10232908
(43) Veröffentlichungstag der Anmeldung: 21.01.2004
(73) Patentinhaber: Goldschmidt GmbH, 45127 Essen (DE)
(72) Erfinder: Knott, Wilfried, Dr., 45141 Essen (DE); Lehmann, Kathrin, 51377 Leverkusen (DE); Silber, Stefan, Dr., 47804 Krefeld (DE)

(56) Entgegenhaltungen:
- EP-A- 0 176 983
- EP-A- 1 053 774
- DE-A- 1 444 555
- DE-B- 1 266 496
- US-A- 5 587 282
- US-A1- 2002 019 459

## Beschreibung

Die Erfindung betrifft die Verwendung organofunktionell modifizierter, Phenylderivate enthaltender Polysiloxane als Dispergier- und Netzmittel für Füllstoffe und Pigmente bei der Herstellung wäßriger Pigmentformulierungen, Lacke, Überzüge und Beschichtungen. Unter dem Begriff Polysiloxane sollen im Rahmen dieser Erfindung auch oligomere Siloxane verstanden werden.

Für die Dispergierung von Füllstoffen und Pigmenten in flüssigen Medien ist die Zuhilfenahme von Dispergiermitteln aus verschiedenen Gründen erforderlich und deshalb Stand der Technik:
- bessere Benetzung der Füllstoffe und Pigmente während der Einarbeitung, z. B. resultierend in kürzeren Dispergierzeiten und geringerem Eintrag von Dispergierenergie;
- Reduktion der Viskosität der Pigmentpasten oder der von Farben und Lacken, wodurch die effizientere Anreibung zu höher konzentrierten Pasten erst ermöglicht wird;
- Entwicklung der optimalen Farbstärke bzw. bei opaken Pigmenten auch des optimalen Deckvermögens;
- Entwicklung hoher Glanzgrade besonders in wässrigen Dispersionen trocknend mittels Koaleszenz;
- Verhinderung der Absetzneigung in Pigmentpasten bei mehrmonatiger Lagerung und Transport über große Entfernungen und bei extremer klimatischer Belastung, wie es z. B. auch bei Pigmenten mit hoher Dichte wie Titandioxid garantiert werden muss;
- Vermeidung von Flockulation zur Herstellung reproduzierbarer Farbtöne besonders wichtig in den heute üblichen Farbmischmaschinen;
- Herstellung der Verträglichkeit mit einer Vielzahl von Auflackbindemitteln.

Zur Erfüllung dieser vielfältigen Anforderungen an Dispergiermittel sowohl während der Herstellung als auch in der Lagerungszeit von Pasten, Farben und Lacken wurden bereits eine Vielzahl von wasserlöslichen Dispergiermittelstrukturen vorgeschlagen.

Neben der Verwendung von preiswerten, ionischen Strukturen besonders für Füllstoffe und oxidische Pigmente auf Basis von Polyphosphaten (Ullmann's Encyclopedia of Industrial Chemistry, Sixth Edition, Point 3.2.6., 2002; Th. Staffel, Farbe & Lack 100, 1994) und Polyacrylsäuren (WO-A-02/14415, WO-A-01/60925, J. Schröder, Farbe & Lack 91, 1985, 11; R. Hildred, Farbe & Lack, 1990, 857-859) haben sich amphiphile Strukturen auf Basis von nichtionischen Fettalkohol- oder Alkylphenolethoxylaten bzw. deren anionisch modifizierte Derivate (J. Bieleman, PPCJ 3, 1995, 17; P. Quednau, ACT'98, Paper No. 29; H. Frommelius, VILF (Verband der Ingenieure für Lacke und Farben) Jahrestagung 2000, 41) einen breiten Anwendungsraum in der Farben- und Lackproduktion erobert.

Ein wesentlicher Nachteil der zuerst genannten Strukturen ist deren Tauglichkeit allein für oxidische, nicht aber für hydrophobe organische Pigmente. Hinzu kommt die ungenügende Langzeitstabilität der damit hergestellten Pasten sowie eine starke Abhängigkeit der Viskositäten von der Einsatz- und Elektrolytkonzentration, die sowohl durch die Einbringung von Ladungen durch unterschiedliche Pigmente als auch durch die Verwendung des in der Fertigung von Pasten, Farben und Lacken üblichen Wassers variieren kann.

Prinzipiell treten diese zuletzt genannten Probleme auch im Zusammenhang mit den ionischen Fettalkohol- oder APE (Alkylphenolethoxylat)-Derivaten auf, die darüber hinaus zu starker Schaumstabilisierung neigen, wodurch neben Produktionsproblemen häufig ein niedrigerer Glanz resultiert.

Die für organische Pigmente geeigneten nichtionischen Derivate zeigen häufig eine ungenügende Affinität und Viskositätsreduktion für oxidische Pigmente.

Alkylphenolethoxylate weisen zwar gegenüber gewöhnlichen linearen oder verzweigten Fettalkoholen eine bessere Pigmentbenetzung und höhere Permanenz auf, sind aber wegen ökotoxikologischer Gesichtspunkte zunehmend unter Druck geraten, in der Farben- und Lackindustrie substituiert zu werden (Journal of Surfactants and Detergents, Vol. 5, No. 1, (2002); Critical reviews in Toxigology, 26(3):335-364, (1996); P. Schöberl, Tenside Surfactants Detergents 25, 1988, 2, 86; K. Fent, Swiss Federal Institute for Enviromental Science and Technology).

Zweifelsohne hat es eine Vielzahl von Bemühungen gegeben, mittels polymerer Strukturen eine Antwort auf die Anforderungen an Dispergiermittel zu finden.

Beschrieben werden beispielsweise wasserlösliche, hydrophile Polyetherketten aufweisende Polyisocyanat-Additionsprodukte (EP-A-0 731 148), hydrophile Polyurethan-Polyharnstoffe (DE-A-44 16 336), Poly(meth)acrylate (US-A-3 980 602, WO-A-94/21701), sowie spezielle Polyester (WO-A-94/18260) oder auch Copolymere auf Basis vinylischer Monomere (Styrol, Vinylimidazol, u.a.) mit acrylatfunktionellen Monomeren (Acrylsäure, BuAc, HEA) wie in EP-B-0 311 157.

Neben störenden oder sogar toxischen Monomerrestanteilen ist häufig keine universelle Verträglichkeit mit den typischen Bindemittelsystemen gegeben.

Bedingt durch Molgewicht, Monomere oder lange Polyethylenoxidketten, die für die Wasserlöslichkeit erforderlich sind, sind die resultierenden Produkte häufig fest und können durch Neutralisation im Allgemeinen nur als 40 %ige wässrige Lösungen formuliert werden, wodurch der Anwender bei der Herstellung hochkonzentrierter Pasten eingeschränkt wird.

Starke Eigenfarbe von amingruppenhaltigen Polymeren oder die nachteilige Beeinflussung der Wasserfestigkeit bzw. Witterungsstabilität in pigmentierten Farben und Lacken schränkt die Nutzung derartiger Strukturen zusätzlich ein.

Ein weiterer gravierender Nachteil liegt in den relativ hohen Mengen, die von polymeren Strukturen gerade für Titandioxid eines der am häufigsten verwendeten Pigmente - benötigt wird.

Der Effizienz polymerer Strukturen hinsichtlich Langzeitstabilität von Pasten durch multifunktionelle Ankermöglichkeiten stehen hohe Produktionskosten, entstehend durch die Polymerisation und eventuelle polymeranaloge Umsetzungen, gegenüber.

Aus DE-C-41 40 793, EP-A-0 546 407, EP-A-0 546 406 ist bekannt, dass Siliconöle ebenso wie silanbasierte Strukturen wie Methacryloxypropyltrimethoxysilan (VILF, Band 3, Jahrestagung Nov. 2000; 6 th Nürnberg Congress, S 147 ff., Apr. 2001) dazu geeignet sind, auch oxidische Oberflächen zu belegen, um so über eine Hydrophobierung der Oberfläche und eine Reduzierung der Viskosität, höhere Kompatibilität mit dem umgebenden organischen Medium und somit eine höhere Effizienz der eingesetzten Pigmente zu garantieren.

Im Allgemeinen handelt es sich dabei aber um Pigmente, die in Kunststoffanwendungen z. B. bei der Herstellung von Pigmentmasterbatches in Polyethylen oder Polypropylen verwandt werden.

In Farben- und Lackanwendungen werden Silane zur Modifizierung von anorganischen Materialien benutzt, um mit den geeigneten organofunktionellen Silanen deren polare Oberflächen, die Ursache für Teilchenagglomeration und hohe Viskosität in einem organischen System sind, ausreichend organophil einzustellen und so die Benetzung durch das organische Polymer zu verbessern (Firmenschrift Degussa "Anwendung von organofunktionellen Silanen-DYNASYLAN). Anwendung finden deratig behandelte Kieselsäuren in UV-härtenden Systemen, die von diesen wässrigen Anwendungen grundsätzlich verschieden sind.

Aufgabe der vorliegenden Erfindung war es, die genannten Nachteile der niedermolekularen und polymeren tensidischen Strukturen zu vermeiden und eine Struktur zu finden, die sowohl hydrophile oxidische Pigment- und Füllstoffoberflächen als auch hydrophobe Pigmente bei möglichst geringer Einsatzkonzentration stabilisiert.

Überraschenderweise wurde gefunden, dass bestimmte organofunktionell modifizierte, Phenylderivate enthaltende, Polysiloxane eine hohe Universalität in Bezug auf die Dispersion von Pigment- und Füllstofftypen in verschiedenen Bindemittelsystemen realisieren können.

Gegenstand der Erfindung ist somit die Verwendung organofunktionell modifizierter Polysiloxane der allgemeinen Formel (I) 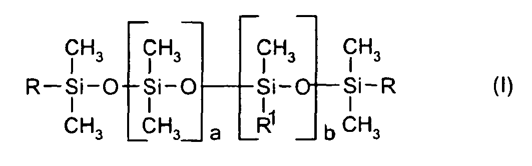 worin bedeuten
- R: gleich oder verschieden R¹ oder -CH₃
- R¹: -(CH₂)_{c}-O - (CH₂-CH(Ph)-O)ₑ -(CₙH₂ₙ₋ₓR²ₓ-O)_{d} - R³ und/oder R^{1'} = -CH₂-CHR*-Ph
R* H oder -CH₃
R² Alkylrest mit 1 bis 5 C-Atomen, vorzugsweise -CH₃
Ph Phenylderivat mit der allgemeinen Formel

-(C₆H_{5-y}R⁴_{y})-

worin
R⁴ ein Hydroxyrest, ein Alkylrest mit 1 bis 6 Kohlenstoffatomen oder ein Alkoxyrest mit 1 bis 6 Kohlenstoffatomen ist, und
y eine Zahl von 0 bis 5, vorzugsweise 0 bis 2 ist,
R³ Wasserstoff, eine Alkylkette mit 1 und bis 18 Kohlenstoffatomen, ein Benzylrest, ein alkylsubstituierter Benzylrest mit bis zu vier Kohlenstoffatomen im Alkylrest, eine COR⁵-Gruppe mit einem Rest R⁵, der eine Alkylkette mit 1 bis 18 Kohlenstoffatomen aufweist, eine CONHR⁶-Gruppe mit einem Rest R⁶, der ein Wasserstoffatom oder eine Alkylkette mit 1 bis 18 Kohlenstoffatomen aufweist, CO₂R⁷, der eine Alkylkette R⁷ mit 1 bis 18 Kohlenstoffatomen
c 2 bis 6, vorzugsweise 2 oder 3,
d 3 bis 70, vorzugsweise 3 bis 50
e 0, ≥ 1, vorzugsweise 1 bis 5 ist, mit der Maßgabe dass wenn e 0 ist, der Wert b > 1 und der Rest R¹' mindestens 1 mal im Molekül vorhanden ist,
n 2 bis 4, vorzugsweise 2 oder 3,
x 0 oder 1,
- a: 0 bis 100,
- b: 1 bis 100,
mit der Maßgabe, dass die Summe a + b = 1 bis 101, vorzugsweise bis 50 und insbesondere bis 25 beträgt, als Dispergier- und Netzmittel für Füllstoffe und Pigmente bei der Herstellung wässriger Pigmentformulierungen, Lacke, Überzüge und Beschichtungen.

Der Wert von b wie auch der Wert von a sind als durchschnittliche Werte im Polymermolekül zu verstehen, da die erfindungsgemäßen Polysiloxane in Form von - im Regelfall - äquilibrierten Gemischen vorliegen.

In den Resten (Ph) = -(C₆H_{5-y}R⁴_{y})- ist R⁴ ein einwertiger Rest, der gleich oder verschieden sein kann und aus den Gruppen Alkylrest mit 1 bis 6 Kohlenstoffatomen, Alkyloxyrest oder Hydroxyrest ausgewählt ist. Bevorzugt sind Methylreste, der Hydroxyrest und Alkoxyreste mit 1 bis 6 Kohlenstoffatomen. Der Index y ist eine Zahl von 0 bis 5. Besonders bevorzugt ist y die Zahl 0 oder 1, sowie als Substituenten der Methyl- und Ethylrest.

Der Polyetherrest R¹ = -(CH₂)_{c}-O-(CH₂-CH(Ph)-O)ₑ-(CₙH₂ₙ₋ₓR²ₓ-O)_{d}-R³ wird durch Umsetzung eines ungesättigten Startalkohols CH₂=CH-(CH₂)_{z}-OH mit z (0 bis 2), der bevorzugt Allylalkohol oder Vinylalkohol ist, durch Anlagerung von Monomeren nach den bekannten Verfahren gewonnen. Geeignete Monomere sind Ethylenoxid, Propylenoxid, Tetrahydrofuran, Butylenoxid, iso-Butylenoxid sowie für den aromatenhaltigen Teil Ph des Polyethers bevorzugt Styroloxid, wobei c 2 bis 6, vorzugsweise 2 oder 3, e 0, ≥ 1, vorzugsweise 1 bis 5 ist, mit der Maßgabe dass wenn e vorhanden ist, n 2 bis 4, vorzugsweise 2 oder 3, x 0 oder 1 und d 3 bis 70, vorzugsweise 3 bis 50 sind; R³ kann dabei Wasserstoff, eine Alkylkette mit 1 und bis 18 Kohlenstoffatomen, ein Benzylrest, ein alkylsubstituierter Benzylrest mit bis zu 4 Kohlenstoffatomen im Alkylrest, eine COR⁵-Gruppe mit einem Rest R⁵, der eine Alkylkette mit 1 bis 18 Kohlenstoffatomen aufweist, eine CONHR⁶-Gruppe mit einem Rest R⁶, der ein Wasserstoffatom oder eine Alkylkette mit 1 bis 18 Kohlenstoffatomen aufweist, CO₂R⁷, der eine Alkylkette R⁷ mit 1 bis 18 Kohlenstoffatomen, sein. Vorzugsweise ist R³ ein Wasserstoffrest, eine Acetylgruppe oder ein Methylrest.

Die Blöcke - (CH₂-CH(Ph)-O)ₑ und -(CₙH₂ₙ₋ₓR²ₓ-O)_{d}- können im Polyether sowohl statistisch verteilt als auch blockweise auftreten. Bei den Indizes d und e handelt es sich um durchschnittliche Zahlen, da es bekannt ist, dass bei der Anlagerung von Epoxiden an Alkohole ein Gemisch von Verbindungen unterschiedlicher Kettenlänge erhalten wird. Der molare prozentuale Anteil Ph in R¹ und/oder R^{1'} in Form von -(CH₂-CH(Ph)-O)ₑ- und -CH₂-CHR*-Ph beträgt vorzugsweise mindestens 20 %, besonders bevorzugt mindestens 30 %. In dem Rest (CₙH₂ₙ₋ₓR²ₓ-O)_{d} - liegt der Anteil von (n = 2) : (n > 2) im Bereich von ca. 4 : 0 bis 1 : 1.

Die Polyetherreste können in das Molekül des Polysiloxans durch Addition der Verbindungen CH₂=CH-(CH₂)_{z}-O-(CH₂-CH(Ph)-O)ₑ-(CₙH₂ₙ₋ₓR²ₓ-O)_{d}-R³ und/oder CH₂=CR*-Ph an SiH-Gruppen des Polysiloxans der allgemeinen Formel 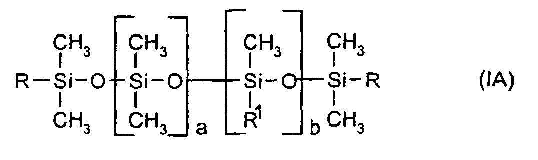 worin
- R¹: H,
- R: R¹ oder -CH₃,
- R*: H oder -CH₃ bedeuten, in Gegenwart von Hydrosilylierungskatalysatoren wie beispielsweise cis-[PtCl₂(NH₃)₂, H₂PtCl₆•6H₂O, Pt₂Cl₄(C₆H₁₀)₂ nach den bekannten Verfahren des Standes der Technik eingebracht werden.

Der Begriff Pigmentformulierungen umfasst sowohl die durch Direktanreibung hergestellten Pasten, als auch die unter Verwendung von Pigmentpasten (Full Mixing und Tinting) resultierenden Formulierungen.

Bei der Direktanreibung wird im Mahlansatz die komplette Pigment/Füllstoff-Mischung im Bindemittel angerieben und anschließend mit den übrigen Lackkomponenten aufgelackt. Alle erfindungsgemäß mitverwendeten Dispergieradditive können für diese Anwendung eingesetzt werden. Dabei wird der Rub-Out verhindert und die Farbstärke verbessert.

Bei der Herstellung über Pigmentpasten (Full Mixing) werden die Pigmente zunächst einzeln in einer hochkonzentrierten Paste angerieben. Hierdurch kann der Dispergierprozess dem jeweiligen Pigment optimal angepasst werden. Diese Pasten werden (je nach gewünschtem Farbton) mit dem fertig formulierten Klarlack, der alle restlichen Lackkomponenten (Bindemittel, Additive, Lösungsmittel etc.) enthält, gemischt. Weiterhin können diese Pigmentpasten zum Abtönen von fertigen Weißlacken (Tinting) oder zur Farbtonkorrektur von fertigen Buntlacken (sog. Abtönpasten) eingesetzt werden. Pigmentpasten können mit speziellen Anreibeharzen oder auch bindemittelfrei hergestellt werden. Einer Verwendung der erfindgungsgemäß beanspruchten Dispergieradditive in einer Direktanreibung, d.h. wo mehrere Pigmente und/oder Füllstoffe gemeinsam mit dem Bindemittel zum fertigen Lack bzw. Endfarbton angerieben werden, steht nichts entgegen.

Die nachfolgend genannten Netz- und Dispergieradditive lassen sich besonders für bindemittelfreie aber auch für bindemittelhaltige Pigmentpasten einsetzen.

Wässrige Pigmentformulierungen, können üblicherweise enthalten:

| | |
|---|---|
| 0,5 bis 50 Gew.-T. | mindestens eine der Verbindung der allgemeinen Formel (I), |
| 0 bis 20 Gew.-T. | Anreibeharz (dispersing resin), |
| 5 bis 80 Gew.-T. | Pigment, |
| 0,1 bis 5 Gew.-T. | üblicher Hilfs- und Zusatzstoffe (Entschäumer, Biozide, Antiabsetzmittel, Neutralisationsmittel, Verdicker, Feuchthaltemittel, Stabilisatoren, Sikkative, Lichtschutzmittel) |
| 0 bis 30 Gew.-T. | Lösemittel |
| at 100 Gew.-T. | Wasser |

Sie können auch mit bis zu dem 100-fachen Gew.-T. an Klarlack aufgelackt bzw. Weißlack getintet werden.

In wässrigen Pastensystemen ist die Wahl des Netz- und Dispergieradditivs abhängig vom verwendeten Pigment und dem Lacksystem, in dem die Paste verarbeitet wird. Weiterhin gibt es neben lösungsmittelfreien auch glykolhaltige Pasten.

Natürlich dürfen Additive im Lackfilm nicht zu Trübungen oder Glanzverlust führen.

Oft wird die Löslichkeit des Additivs in einer hochkonzentrierten Bindemittellösung als Kriterium für die Verträglichkeit herangezogen. Eine schwache Trübung des Additivs im Bindemittel kann aber auf die Haftgruppen zurückzuführen sein oder sogar die Neigung des Additives signalisieren mit dem Hydrophobanteil aus der wässrigen Umgebung an eine hydrophobe Pigmentoberfläche zu migrieren, so dass im pigmentierten Lack in der Praxis trotzdem hochglänzende trübungsfreie Beschichtungen erhalten werden können.

Üblicherweise führt der Fachmann zur Übersicht folgende Versuche durch: Zu 50 g Bindemittellösung gibt man 1 g, 5 g bzw. 10 g Dispergiermittel, womit man den unterschiedlichen Bedarf von oxidischen und organischen Pigmenten an Dispergiermittel berücksichtigt, und betrachtet die Trübungs- oder auch Koagulationsneigung (z.B. bei Dispersionen) in einem Glas. Durch anschließendes Applizieren auf transparente Folie und farbmetrische Vermessung über einer genormten Schwarztafel kann diese Eigenschaft quantifiziert werden.

### Rub-out-Test:

Um insbesondere das vertikale Ausschwimmen von Pigmenten in Lackfilmen sichtbar und meßbar zu machen, kann man den sogenannten Rub-out-Test durchführen. Dazu reibt man den noch feuchten, aber bereits angezogenen Lackfilm mit dem Finger oder einem Pinsel. Haben sich die Pigmente entmischt oder liegen sie stark flockuliert vor, so wird durch den mechanischen Vorgang des Reibens wieder eine homogene Verteilung erzwungen. Es entsteht der angestrebte Farbton des homogenen Gemisches. An der Farbdifferenz zum ungeriebenen Film erkennt man das Ausmaß der Störung. Man kann sowohl einen positiven als auch einen negativen Rub-out-Effekt erhalten. Ein positiver Rub-out-Effekt bedeutet, dass die Farbstärke des ungeriebenen Films niedriger als die des geriebenen Films ist, was z. B. auf das Aufschwimmen von Weißpigment zurückzuführen sein kann. Bei einem negativen Rub-out-Effekt ist es umgekehrt.

### Ablauftest:

Zur Bewertung von deflockulierenden oder schwach flockulierenden Additiven eignet sich ein Ablauf oder Aufzug auf einer transparenten Folie. Die Qualität verschiedener Dispergieradditive lässt sich mit Kriterien wie Glanz, Glanzschleier und ggf. Transparenz bewerten.

### Lagerstabilität:

Von den hergestellten Pigmentpasten werden je 100 ml Probe in eine Glasflasche abgefüllt, um nach 1, 3 und 6 Monaten an unberührten Proben die Bodensatz- und Serumbildung zu beurteilen. Nach dem entsprechenden Ruhezeitraum wird die Paste betrachtet und die über der Paste stehende Menge Serum in Millimetern angegeben. Mit einem Spatel wird vorsichtig über den Boden der Paste gezogen und die daran verbleibende Menge Bodensatz mit "kein, wenig oder viel" deklariert.

### Viskositätsbestimmung:

Neben den coloristischen Parametern ist die Bestimmung der Viskosität der resultierenden Pigmentpasten ein wichtiges Kriterium, um die Benetzung der entsprechenden Pigmentoberfläche zu beurteilen. Dazu werden verschiedene Arten von Viskosimetern eingesetzt. Darüber hinaus kann die Konstanz der Viskosität nach 1, 3 und 6 Monaten dazu dienen, die Permanenz der PigmentDispergiermittel-Wechselwirkung zu charakterisieren und somit die Lagerstabilität der Pasten zu garantieren.

Übliche Viskositätsprofile, die erfasst werden, sind z.B. von 100 bis 1.000 mPas in 100 mPas Schritten in 180 s oder von 100 bis 1.000 mPas mit Pause bei 100 mPas (60 s halten) mit Anstieg um 100 mPas bis 1.000 mPas (60 s halten) und zurück auf 100 mPas. Zur Erfassung werden verschiedene Viskosimeter eingesetzt, wie z.B. Europhysics, RHEO 2000.

### Bestimmung der farbmetrischen Werte:

Die auf Kartonkarten (Lineta^{®} Karte) aufgezogenen pigmentierten Lacke und Farben werden mittels eines Farbmessgerätes (Typ X-Rite, SP 62-162, Lichtart D65/10, Firma X-Rite) in Form von L*a*b*-Werten (Helligkeit, Farbstich auf der Rot/Grün-Skala, Farbstich auf der Gelb/Blau-Skala) bestimmt.

In den folgenden Beispielen wird zunächst die Herstellung von erfindungsgemäßen organofunktionell modifizierten, Phenylderivate enthaltenden Polysiloxanen der Formel (I) gezeigt. Die in diesen Beispielen hergestellten Produkte werden mit D1, D2, D3 und D4 bezeichnet. Dabei sollen die genannten Beispiele die erfindungsgemäßen Verbindungen veranschaulichen, jedoch auf keinen Fall den Anspruch auf die unten aufgeführten Verbindungen beschränken.

### Beispiele 1 bis 4:

### Beispiel 1:

In einem 250-ml-Vierhalskolben, ausgerüstet mit KPG-Rührer, Tropftrichter, Intensivkühler und Stickstoffüberleitung werden 182,5 g eines mit Allylalkohol gestarteten Copolymers (bestehend aus Styrol- und Ethylenoxideinheiten mit einer Molmasse von 1,040 g/mol) zusammen mit 37,0 g eines seitenständigen Wasserstoffsiloxans (SiH-Gehalt: 3,51 Val/kg) unter Rühren auf 90 °C erhitzt und mit 10 ppm Pt in Form von cis-Diamminoplatin(II)chlorid als Katalysator versetzt. Spontan setzt die SiC-Verknüpfungsreaktion ein, die sich durch eine geringe Exothermie zu erkennen gibt. Nach 2,5 Stunden zeigt die gasvolumetrische SiH-Bestimmung (Zersetzung einer eingewogenen Probe mit Natriumbutylat unter Wasserstofffreisetzung) einen SiH-Umsatz von 99,6 %. Nach Abkühlen des Reaktionsansatzes wird das Siloxan-Polyether-Copolymer als eine gelbe, viskose Flüssigkeit isoliert.

### Beispiel 2:

In Analogie zu Beispiel 1 werden 211,4 g eines mit 4-Hydroxybutylvinylether gestarteten Polyethers (bestehend aus Styrol- und Ethylenoxideinheiten mit einer Molmasse von 2,008 g/mol) zusammen mit 22,2 g eines seitständigen Wasserstoffsiloxans (SiH-Gehalt: 3,51 Val/kg, Strukturtyp: M D₁₃D^{H}₅M) unter Rühren auf 90 °C erhitzt und mit 10 ppm Pt in Form von cis-Di-amminoplatin(II)chlorid als Katalysator versetzt. Bei dieser sehr moderaten Reaktion wird im Verlauf von 12 Stunden und unter Zugabe weiteren Platinkatalysators (10 ppm) ein gasvolumetrisch ermittelter SiH-Umsatz von 96 % erreicht. Das erhaltene Copolymer ist braun gefärbt und von wachsartiger Konsistenz.

### Beispiel 3:

In einer Apparatur wie in Beispiel 1 beschrieben wird ein Gemisch bestehend aus 213,2 g eines mit Allylalkohol gestarteten Copolymeren (enthaltend Propylenoxid- und Ethylenoxideinheiten mit einer Molmasse von 900 g/mol und einem Propylenoxidanteil von ca. 20 %) und 12,17 g Styrol unter kräftigem Rühren auf 90 °C erhitzt und mit 10 ppm Pt (in Form von H₂PtCl₆ 6H₂O gelöst in Isopropanol) als Katalysator versetzt. 40 g eines seitständigen Wasserstoffsiloxans (Strukturtyp: MD₃D^{H}₅M, SiH-Gehalt: 7,3 Val/kg) werden im Verlauf von 30 Minuten so zugetropft, dass die Temperatur des Reaktionsansatzes 120 °C nicht überschreitet. Nach beendeter Zugabe lässt man den Ansatz ca. 3 Stunden bei 100 °C nachrühren. Der gasvolumetrisch ermittelte SiH-Umsatz liegt bei > 99 %. Erhalten wird eine gelbe, leicht bewegliche Flüssigkeit.

### Beispiel 4:

In einem 250-ml-Vierhalskolben, ausgerüstet mit KPG-Rührer, Tropftrichter, Intensivkühler und Stickstoffüberleitung werden 40 g eines seitständigen Wasserstoffsiloxans (SiH-Gehalt: 2,79 Val/kg, Strukturtyp: MD₃₈D^{H}₁₀M) zusammen mit 156,8 g eines Allylalkohol gestarteten Copolymers (bestehend aus Styrol- und Ethylenoxideinheiten, M: 1,040 g/mol) unter Rühren auf 90 °C erhitzt und mit 10 ppm Pt in Form von cis-Diamminoplatin(II)chlorid als Katalysator versetzt. Nach ca. 3 Stunden ist die SiC-Verknüpfungsreaktion gemäß gasvolumetrischer SiH-Bestimmung zu 98 % abgeschlossen. Ein gelbes, hochviskoses Siloxan-Polyether-Copolymer wird erhalten.

Struktur der den Beispielen D1, D2, D3 und D4 zugrunde liegenden Siloxanen

### Wasserstoffsiloxan für D1 und D2:

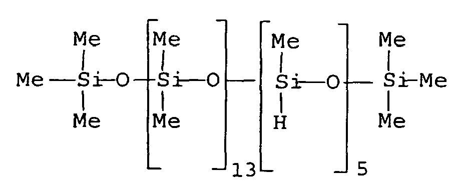

### Wasserstoffsiloxan für D3:

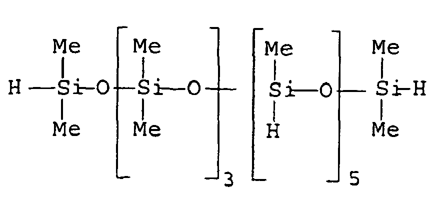

### Wasserstoffsiloxan für D4:

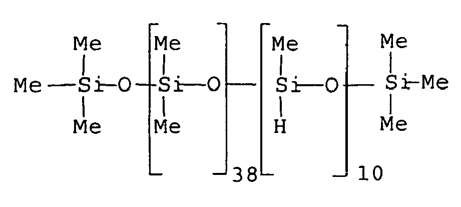

Als Ausgangsprodukt für die nachfolgende Hydrosilylierung dienen die folgenden Polyether CH₂=CH-(CH₂)_{z}-O-(CH₂-CH(Ph)-O)ₑ-(CₙH₂ₙ₋ₓR²ₓ-O)_{d}-R³

**Tabelle I:**

| Verbindung | z | Ph | e | n | x | R² | d | R³ |
|---|---|---|---|---|---|---|---|---|
| PE 1 | 1 | C₆H₅ | 2 | 2 | 0 | - | 17 | H |
| PE 2* | 0 | C₆H₅ | 4 | 4/2 | 0 | - | 1/32 | H |
| PE 3** | 1 | - | 0 | 2/2 | 1/0 | CH₃/- | 3/15 | H |

| | | | | | | | | |
|---|---|---|---|---|---|---|---|---|
| *Bedeutung: In PE 2 wird ein vinylgestarteter Polyether mit einem Mol Butylenoxid (n = 4, d = 1, x = 0) und 32 Mol Ethylenoxid (n = 2, d = 32, x = 0) definiert, der zusätzlich 4 Mol Styroloxid enthält **Bedeutung: Dieser Allylalkohol gestartete Polyether enthält 3 Mol Propylenoxid (n = 2, x = 1, R² = CH₃) und 15 Mol Ethylenoxid (n = 2, x = 0) | | | | | | | | |

wobei diese für die Herstellung der mit der allgemeinen Formel (I) bezeichneten Phenylderivate enthaltenden Polysiloxane als Dispergiermittel für wässrige Pigmentpasten verwendet werden.

Dabei haben die Reste und Indizes die in Tabelle II gezeigten Bedeutungen.

**Tabelle II:**

| Verbindungen laut Formel (I) | | | | | |
|---|---|---|---|---|---|
| | a | b | R¹ | R^{1'} | R |
| D 1 | 13 | 5 | 5x PE 1 | - | CH₃ |
| D 2 | 13 | 5 | 5x PE 2 | - | CH₃ |
| D 3* | 3 | 5 | 3x PE 3 | 2x Styrol | CH₃ |
| D 4 | 38 | 10 | 10x PE 1 | - | CH₃ |

| | | | | | |
|---|---|---|---|---|---|
| *Bedeutung: Im Siloxanmolekül ist der Polyether PE 3 (Tabelle I) 3 mal vorhanden, und 2 mal der Rest R^{1'} (Styrol) . | | | | | |

Nichterfindungsgemäße Vergleichsbeispiele sind die nachfolgenden Dispergiermittel, die als handelsübliche Produkte für wässrige Pigmentpasten angeboten werden und entsprechend den unten stehenden Angaben charakterisierbar sind:
- V 1: 100 %iges β-Naphtholethoxylat mit ca. 10 Ethylenoxideinheiten (EO);
- V 2: 100 %iges Ethoxylat der Ölsäure mit ca. 40 EO
- V 3: 40 %ige wässrige Lösung eines hochmolekularen Styrol-Maleinsäureanhydrid-Copolymeren mit Polyetherseitenketten
- V 4: 40 %ige wässrige, neutralisierte Lösung einer polymeren Acrylsäure.

Die vorgenannten erfindungsgemäßen und nichterfindungsgemäßen Vergleichsbeispiele können zur Formulierung der folgenden Pigmentpasten verwendet werden, nachdem sie mit destilliertem Wasser auf 40 % Festkörper eingestellt wurden (Ausnahme V 3 und V 4).

Zur Prüfung der technischen Eigenschaften der erfindungsgemäßen Siloxane bzw. der diese enthaltenden Zubereitungen werden die Siloxane für die Herstellung von Pigmentpasten verwendet.

### Herstellung von Pigmentpasten:

Zur Herstellung wässriger Pigmentpasten werden 0,1 bis 80,0 Gewichtsteile des nach Möglichkeit neutralisierten, speziell modifizierten Silikonpolyetherderivats verwendet, vorzugsweise 0,5 bis 50,0 Gewichtsteile.

Falls die Derivate nicht flüssig sind oder wegen höherer Viskositäten geringe Dosierungen schwierig erscheinen lassen, empfiehlt sich die vorherige Herstellung einer 40 bis 50 %igen wässrigen Lösung der Verbindung beschrieben in Formel (I). Bei der erfindungsgemäßen Verwendung werden derartige Verbindungen entweder ohnehin mit Wasser vorgelegt und dann die entsprechenden Pigmente und Füllstoffe eingearbeitet, wobei dies auch eventuelle Zusätze von glykolhaltigen Lösemitteln mit 0 bis 30 Gewichtsteilen, vorzugsweise mit 0 bis 10 Gewichtsteilen einschließt. Prinzipiell können die erfindungsgemäß beanspruchten Dispergiermittel auch gleichzeitig mit dem Pigment bzw. Füllstoff in das Dispergiermedium eingetragen werden bzw. vorab mit diesem vermischt werden. Der kombinierte Einsatz der erfindungsgemäß beanspruchten Verbindungen mit weiteren bereits bekannten Dispergiermitteln wird im Rahmen dieser Anmeldung natürlich eingeschlossen, weil der Fachmann ohnehin in der Weise arbeitet, um spezielle Eigenschaftsprofile zu erzielen.

Zur Beschreibung der Pigmente soll im Folgenden unterschieden werden zwischen anorganischen und organischen Pigmenten sowie die Gruppe der Ruße soll in diesem Zusammenhang genannt werden. Als anorganische Pigmente sollen Titandioxid, unterschiedliche Modifikationen des Eisenoxids, Spinell-Pigmente und Ultramarin-Pigmente betrachtet werden (H. Endriß, Aktuelle anorganische Bunt-Pigmente, Vincentz, 1997).

Für die Gruppe der organischen Pigmente seien exemplarisch genannt (P.F. Gordon, P. Gregory, Organic Chemistry in Colour, Springer-Verlag, 1983; W. Herbst, K. Hunger, Industrial organic pigments, VCH, 1993):
a) verschiedenartige Azopigmente wie β-Naphthol-Pigmente, Diazo-Pigmente, Naphthol AS-Pigmente, Benzimidazolon-Pigmente, Isoindolinone oder auch Azo-Metallkomplex-Pigmente;
b) polycyclische Pigmente wie z.B. Phthalocyanin-Pigmente, Quinacridone, Perylen-Pigmente, Dioxazine sowie Thioindigo-Typen;
c) Vielzahl andersartiger organischer Pigmente wie z.B. Diketopyrrolo-Pyrrole oder Quinophthalone.

Die erfindungsgemäßen Dispergiermittelstrukturen eignen sich darüber hinaus besonders für die Herstellung wässriger Rußpasten.

Für die Gruppe der Füllstoffe, die in wässrigen Farb- und Lackformulierungen dispergiert werden können, sind z.B. Kreide, Talkum, Kaoline und andere silikatischen Füllstoffe zu benennen.

Die erfindungsgemäß beanspruchten Dispergiermittel sind nach Verwendung in Pigmentpasten mit dem gesamten Spektrum an dispersionsbasierten Bindemitteln wie z.B. Reinacrylatdispersionen, Styrolacrylatdispersionen, Alkydharzemulsionen und PU-modifizierte Varianten, Terpolymerisaten auf Basis von PVAc und Hybrid-Dispersionen (z.B. Alkyd-Acrylat-Blend) auflackbar. Darüber hinaus kommen sie für die Verwendung in wässrigen 1K- und 2K-Lacken in Frage, in denen OH-funktionelle Polyester oder Polyacrylate mit blockierten Isocyanaten oder Melaminen vernetzt werden. Einer Verwendung in Epoxidharzsystemen steht nichts entgegen und auch hochwertige wasserbasierte sogenannte AA Systeme (OH-funktionelles Acrylat + epoxyfunktionelles Acrylat) sind als Acrylatsysteme relevant.

### System 1:

### Formulierung der Farbpaste:

### Allgemeine Bedingungen:

| | |
|---|---|
| demineralisiertes Wasser | 20,1 |
| Dispergieradditiv, 40 % Feststoff wie oben beschrieben | 8,8 |
| Entschäumer Tego^{®} Foamex 830 | 1,0 |
| Biocide Parmetol^{®} K 40 (Fa. Schülke & Mayr) | 0,10 |
| Rühren bis homogen Titandioxid KRONOS^{®} 2310 (Fa. KRONOS Int.) | 70,0 |

Pigment einrühren, dann 1 h mit Glasperlen dispergieren (1 : 1 Volumen/z.B. mittels Schüttler Typ BA-S 20K der Fa. Lau GmbH).

### System 2:

### Formulierung der Farbpaste:

### Allgemeine Bedingungen:

| | |
|---|---|
| demineralisiertes Wasser | 47,8 |
| Dispergieradditiv, 40 % Feststoff wie oben beschrieben | 29,7 |
| Entschäumer Tego^{®} Foamex 830 | 1,0 |
| Biocide Parmetol^{®} K 40 (Fa. Schülke & Mayr) | 0,10 |
| Rühren bis homogen Ruß Printex^{®} 95 (Fa. Degussa) | 20,0 |

Pigment einrühren, dann 2 h mit Glasperlen dispergieren (1 : 2 Volumen/z.B. mittels Schüttler Typ BA-S 20K der Fa. Lau GmbH)

### System 3:

### Formulierung der Farbpaste:

### Allgemeine Bedingungen:

| | |
|---|---|
| demineralisiertes Wasser | 28,9 |
| Dispergieradditiv, 40 % Feststoff wie oben beschrieben | 35,0 |
| Entschäumer Tego® Foamex 830 | 1,0 |
| Biocide Parmetol® K 40 (Fa. Schülke & Mayr) | 0,10 |
| Rühren bis homogen Phthalocyanin Heliogenblau^{®} L 7101 F (Fa. BASF AG) | 35,0 |

Pigment einrühren, dann 2 h mit Glasperlen dispergieren (1 : 2 Volumen/z.B. mittels Schüttler Typ BA-S 20K der Fa. Lau GmbH)

### System 4:

### Formulierung der Farbpaste:

### Allgemeine Bedingungen:

| | |
|---|---|
| demineralisiertes Wasser | 13,9 |
| Dispergieradditiv, 40 % Feststoff wie oben beschrieben | 19,5 |
| Entschäumer Tego® Foamex 830 | 1,0 |
| Biocide Parmetol® K 40 (Fa. Schülke & Mayr) | 0,10 |
| Rühren bis homogen Eisenoxidrot Bayferrox^{®} 140 M (Fa. Bayer AG) | 65,0 |

Pigment einrühren, dann 2 h mit Glasperlen dispergieren (1 : 1 Volumen/z.B. mittels Schüttler Typ BA-S 20K der Fa. Lau GmbH).

Diese erfindungsgemäßen und nichterfindungsgemäßen Pasten basierend auf den Systemen 2 und 3 werden entsprechend dem in der Lackindustrie üblichen sogenannten Fullmixing zusammen mit den entsprechenden Titandioxidpasten (System 1) in einen Klarlack auf Basis einer Acrylatdispersion (Primal^{®} HG 98 D, Fa. Rohm & Haas) in den folgenden Verhältnissen gemischt: Auf 10 g Klarlack werden je 3,55 g Titandioxidpaste eingesetzt. Es werden 0,49 g Rußpaste (entspricht einem Pigmentverhältnis von 25 : 1) oder 0,28 g Phthalocyaninpaste (entspricht einem Pigmentverhältnis von 25 : 1) zugemischt.

Die genannten Mischungen werden anschließend 5 Minuten bei 1.500 Upm homogenisiert.

Der dazu verwendete Klarlack ist der unten stehenden Formulierung zu entnehmen:

### Formulierung des Klarlackes 1:

| | |
|---|---|
| Lösemittel Propylenglykol | 4,0 |
| demineralisiertes Wasser | 4,0 |
| Neutralisationsmittel Ammoniak 25 % | 0,1 |
| Verdicker Acrysol^{®} RM 1020 (Fa. Rohm & Haas) | 4,1 |
| Entschäumer Tego^{®} Foamex 1488 | 0,7 |
| Lösemittel Texanol | 5,0 |
| Bindemittel Primal® HG 98 D (Fa. Rohm & Haas) | 72,0 |
| demineralisiertes Wasser | 10,1 |
| | 100,0 |

Zusätzlich können die erfindungsgemäßen und nichterfindungsgemäßen Buntpasten (Systeme 2 und 3) in einen Weißlack auf Basis einer Acrylatdispersion (NeoCryl^{®} XK 90, Fa. NeoResins) eingebracht werden, die der folgenden Formulierung entspricht.

### Formulierung des Weißlackes 1:

| | |
|---|---|
| Lösemittel Propylenglykol | 2,3 |
| demineralisiertes Wasser | 3,0 |
| Neutralisationsmittel AMP-90^{®} (Fa. Angus) | 0,2 |
| Entschäumer Tego^{®} Foamex 805 | 0,2 |
| Netzmittel Surfynol^{®} 104 E (Fa. Air Products) | 0,4 |
| Anreibeharz NeoCryl^{®} BT 24 (Fa. NeoResins) | 2,9 |
| Titandioxid KRONOS^{®} 2310 (Fa. KRONOS Int.) | 21,4 |

20 Min. bei 6.000 Upm mit Dispermat z.B. der Fa. VMA Getzmann in einen 1.000 ml Edelstahltopf mit einer Dissolverscheibe d = 60 mm dispergieren

| | |
|---|---|
| Verdicker Rheolate^{®} 278 (Fa. Rheox) | 3,6 |
| Lösemittel Butylglykol | 2,9 |
| Lösemittel Methoxybutanol | 3,1 |
| Bindemittel NeoCryl^{®} XK 90 (Fa. NeoResins) | 54,0 |
| Entschäumer Tego^{®} Foamex 805 | 0,4 |
| demineralisiertes Wasser | 5,6 |
| | 100,0 |

Weiterhin werden die erfindungsgemäßen und nichterfindungsgemäßen Buntpasten (Systeme 2 und 3) in einen Weißlack auf Basis eines 2K-Polyurethansystems (Acrylat/Isocyanat, Bayhydrol^{®} VP LS 2235/1 und Bayhydur^{®} VP LS 2319/80, Fa. Bayer AG) eingebracht, die der folgenden Formulierung entspricht. Die Vernetzung des Acrylates erfolgt durch Mischen von 100 Gewichtsteilen Weißlack mit 22 Gewichtsteilen Bayhydur^{®} VP LS 2319/80 (Isocyantkomponente). 10 g dieser vorgenannten Bindemittel-Härter-Mischung werden entweder mit 0,49 g Rußpaste (System 2, entspricht einem Pigmentverhältnis von 35 : 1) oder 0,28 g Phthalocyaninpaste (System 3, entspricht einem Pigmentverhältnis von 22 : 1) homogenisiert (5 Minuten bei 1.500 Upm mischen) und nach Trocknung über Nacht die entsprechenden Parameter bestimmt.

### Formulierung des Weißlackes 2:

| | |
|---|---|
| Bindemittel Bayhydrol^{®} VLS 2235/1 (Fa. Bayer AG) | 41,0 |
| Netzmittel Surfynol^{®} 104 E Fa. Air Products) | 1,0 |
| Titandioxid KORNOS^{®} 2310 (Fa. KRONOS Int.) | 35,0 |
| Bindemittel Bayhydrol^{®} VPLS 2235/1 (Fa. Bayer AG) | 16,5 |
| Verdicker Acrysol^{®} RM 8 20 %ig in Ethanol (Fa. Rohm & Haas) | 0,6 |
| demineralisiertes Wasser | 5,9 |
| | 100,0 |

Zur Bestimmung der Verträglichkeit der erfindungsgemäßen und nichterfindungsgemäßen Dispergiermittel erfolgte die Prüfung der Titandioxidpasten (System 1) und Phthalocyaninpasten (System 3) durch Auflacken von 3,55 g Titandioxidpaste mit 10 g des Klarlackes auf Basis einer Alkydharzdispersion (Uradil 5560 AZ, Fa. DSM). Die Mischung wird 5 Minuten bei 1.500 Upm homogenisiert.

### Formulierung des Klarlackes 2:

| | |
|---|---|
| demineralisiertes Wasser | 11,45 |
| Bindemittel Uradil^{®} XP 5560 AZ (Fa. DSM) | 80,00 |
| Verdicker Acrysol^{®} RM 8 (Fa. Rohm & Haas) | 1,00 |
| Verdicker Acrysol^{®} RM 2020 (Fa.Rohm & Haas) | 4,40 |
| Sikkativ Additol^{®} VXW 4940 (Fa. Vianova) | 0,70 |
| Netzmittel Tego^{®} Wet 280 | 0,45 |
| Lösemittel Propylenglykol | 2,00 |
| | 100,0 |

### Ergebnisse:

### Viskositäten und Pastenstabilitäten

Für die Beurteilung der Eignung der erfindungsgemäßen und nichterfindungsgemäßen Dispergiermittel wurde für die Systeme 1, 2 und 3 jeweils das Schergefälle (100¹/s bis 1.000¹/s) aufgenommen bzw. bei Eisenoxidrot (System 4) die Viskosität bei niedriger Scherrate (100¹/s) geprüft und die Pasten nach 4 Monaten hinsichtlich Bodensatz und Serumbildung beurteilt

**Tabelle III:**

| Viskositätsprofile der Titandioxidpasten (System 1): | | | | | | | | |
|---|---|---|---|---|---|---|---|---|
| | V 1 | V 2 | V 3 | V 4 | D 1 | D 2* | D 3 | D 4* |
| 100 | 3687 | 685 | 46 | 127 | 605 | 58 | 531 | 72 |
| 200 | 1805 | 402 | 42 | 90 | 278 | 45 | 304 | 61 |
| 300 | 1333 | 389 | 41 | 81 | 225 | 41 | 217 | 57 |
| 400 | 1113 | 254 | 40 | 77 | 183 | 36 | 158 | 53 |
| 500 | 951 | 221 | 39 | 73 | 140 | 34 | 122 | 51 |
| 600 | 842 | 197 | 38 | 71 | 102 | 33 | 100 | 47 |
| 700 | 745 | 169 | 37 | 68 | 83 | 33 | 94 | 44 |
| 800 | 671 | 145 | 37 | 67 | 72 | 33 | 79 | 42 |
| 900 | 624 | 132 | 36 | 67 | 60 | 32 | 68 | 40 |
| 1000 | 571 | 128 | 35 | 67 | 49 | 31 | 62 | 39 |

| | | | | | | | | |
|---|---|---|---|---|---|---|---|---|
| *Bedeutung: Bei der Formulierung der Weißpasten wurden 30 % des genannten Dispergiermittels durch 30 % Coadditiv (phosphoryliertes Polyetherderivat) zur Absenkung der Viskosität ersetzt. | | | | | | | | |

**Tabelle IV:**

| Viskositätsprofile der Rußpaste (System 2): | | | | | | | | |
|---|---|---|---|---|---|---|---|---|
| | V 1 | V 2 | V 3 | V4 | D 1 | D 2 | D 3 | D 4 |
| 100 | 16 | 153 | 28 | 619 | 48 | 6 | 43 | 53 |
| 200 | 17 | 121 | 27 | 291 | 46 | 6 | 42 | 51 |
| 300 | 17 | 102 | 27 | 236 | 41 | 6 | 40 | 47 |
| 400 | 17 | 96 | 26 | 201 | 37 | 7 | 36 | 43 |
| 500 | 17 | 91 | 26 | 176 | 32 | 8 | 33 | 41 |
| 600 | 16 | 87 | 25 | 157 | 29 | 8 | 31 | 39 |
| 700 | 16 | 85 | 24 | 143 | 26 | 8 | 28 | 36 |
| 800 | 16 | 83 | 24 | 132 | 24 | 9 | 26 | 35 |
| 900 | 16 | 82 | 23 | 123 | 22 | 9 | 24 | 34 |
| 1000 | 16 | 81 | 23 | 116 | 21 | 9 | 22 | 34 |

**Tabelle V:**

| Viskositätsprofile der Phthalocyaninpasten (System 3): | | | | | | | | |
|---|---|---|---|---|---|---|---|---|
| | V 1 | V 2 | V3 | V 4 | D 1 | D 2 | D 3 | D 4 |
| 100 | 44 | 62 | 566 | 906 | 51 | 226 | 236 | 87 |
| 200 | 43 | 59 | 370 | 475 | 45 | 126 | 159 | 79 |
| 300 | 42 | 57 | 309 | 371 | 38 | 104 | 136 | 73 |
| 400 | 42 | 56 | 269 | 326 | 35 | 91 | 122 | 69 |
| 500 | 40 | 54 | 240 | 240 | 32 | 81 | 111 | 66 |
| 600 | 40 | 54 | 219 | 218 | 30 | 74 | 103 | 63 |
| 700 | 39 | 53 | 203 | 202 | 28 | 72 | 97 | 60 |
| 800 | 39 | 53 | 190 | 188 | 27 | 65 | 92 | 58 |
| 900 | 38 | 53 | 179 | 177 | 26 | 62 | 88 | 56 |
| 1000 | 38 | 52 | 169 | 173 | 25 | 59 | 84 | 55 |

**Tabelle VI:**

| Beurteilung der Eisenoxidrotpasten (System 4): | | | |
|---|---|---|---|
| Bayferrox 130 M | Viskosität 100¹/s in mPas | Bodensatz (nach 4 Wochen Raumtemperatur) | Serum (mm) (nach 4 Wochen Raumtemperatur) |
| V 1 | nicht bestimmbar | | |
| V 2 | 642 | viel | 8 |
| V 3 | 258 | wenig | 7 |
| V 4 | 312 | viel | 11 |
| D 1 | 215 | wenig | 2 |
| D 2 | 234 | kein | 4 |
| D 3 | 193 | wenig | 1 |
| D 4 | 248 | kein | 2 |

Die Betrachtung der oben aufgeführten erzielbaren Viskositäten für anorganische und organische Pigmente macht die deutliche Eignung der erfindungsgemäßen Dispergiermittel D 1 bis D 4 gegenüber den Vergleichsbeispielen deutlich. Bei diesen ist entweder kein universeller Einsatz auf oxidischen und hydrophoben organischen Pigmentoberflächen möglich (Pasten sind deutlich höher viskos oder nicht herstellbar) oder es tritt stärkeres Absetzen während der Lagerung auf, wie am Beispiel des Eisenoxidrot gezeigt wurde.

### Farbmetrische Ergebnisse und Glanzbeurteilung:

**Tabelle VII:**

| System 1 und 2 mit Klarlack 1 (Fullmixing): | | | |
|---|---|---|---|
| | Helligkeit L* | Rub-Out ΔE | Glanz 20° |
| V 1 | 46,93 | 1,34 | 32,4 |
| V 2 | 48,27 | 2,73 | 28,4 |
| V 3 | 45,10 | 4,22 | 30,0 |
| V 4 | 51,43 | 3,27 | 26,1 |
| D 1 | 45,44 | 1,28 | 44,3 |
| D 2 | 44,27 | 0,24 | 43,6 |
| D 3 | 45,78 | 0,85 | 32,7 |
| D 4 | 44,95 | 1,07 | 38,5 |

**Tabelle VIII:**

| System 2 bzw. 3 in Weißlack 1: | | | | | | | |
|---|---|---|---|---|---|---|---|
| | System 2 | | | | System 3 | | |
| | Helligkeit L* | Rub-Out ΔE | Glanz 20° | | Helligkeit L* | Rub-Out ΔE | Glanz 20° |
| V 1 | 45,11 | 2,14 | 23,2 | | 63,63 | 1,55 | 19,5 |
| V 2 | 46,25 | 3,51 | 28,5 | | 65,28 | 2,03 | 24,2 |
| V 3 | 45,31 | 1,82 | 30,6 | | 64,92 | 0,97 | 31,6 |
| V 4 | 49,54 | 2,95 | 21,7 | | 67,57 | 3,02 | 18,5 |
| D 1 | 44,91 | 1,80 | 32,9 | | 64,66 | 0,76 | 33,2 |
| D 2 | 43,48 | 0,95 | 41,3 | | 64,88 | 0,87 | 35,0 |
| D 3 | 44,54 | 1,80 | 40,1 | | 63,82 | 0,51 | 31,9 |
| D 4 | 43,98 | 1,08 | 36,1 | | 64,05 | 0,83 | 34,2 |

Es ist deutlich zu erkennen, dass durch die Verwendung der erfindungsgemäßen Dispergiermittel sowohl im Fullmixing als auch im Tinting der Weißlacke von Acrylatdispersionen hohe Farbstärken (niedrige L*-Werte), niedrige Rub-Outs und hohe Glanzentwicklung garantiert werden können, wobei diese Vorteile in Kombination für den Anwender relevant sind.

**Tabelle IX:**

| System 2 bzw. 3 in Weißlack 2: | | | | | |
|---|---|---|---|---|---|
| | System 2 | | | System 3 | |
| | Helligkeit L* | Rub-Out ΔE | | Helligkeit L* | Rub-Out ΔE |
| V 1 | 47,85 | 0,83 | | 67,73 | 0,67 |
| V 2 | 49,06 | 2,86 | | 69,25 | 0,73 |
| V 3 | 47,99 | 1,30 | | 64,12 | 0,68 |
| V 4 | 53,24 | 4,38 | | 72,38 | 2,14 |
| D 1 | 47,32 | 0,65 | | 64,10 | 0,48 |
| D 2 | 46,89 | 0,25 | | 63,54 | 0,27 |
| D 3 | 47,14 | 0,71 | | 64,02 | 0,53 |
| D 4 | 47,54 | 0,63 | | 63,81 | 0,61 |

### Anmerkung: Die Glanzwerte dieses 2K-PU-Systems waren zur Differenzierung nicht geeignet, da stets sehr hohe Glanzwerte beobachtbar waren.

In dem oben genannten vernetzenden Polyurethansystem wird die Leistungsfähigkeit der erfindungsgemäßen Dispergiermittel anhand der Farbtiefeentwicklung kombiniert mit niedrigen Rub-Out-Werten deutlich.

**Tabelle X:**

| System 1 in Klarlack 2: | |
|---|---|
| | Glanz 20° |
| V 1 | 51,5 |
| V 2 | 62,4 |
| V 3 | 80,6 |
| V 4 | 49,5 |
| D 1 | 83,2 |
| D 2 | 81,7 |
| D 3 | 80,8 |
| D 4 | 82,5 |

Die hohen Glanzwerte der Titandioxidpasten auf Basis der erfindungsgemäßen Dispergiermittel, aufgelackt mit Alkydharzemulsion (Klarlack 2), verdeutlichen, dass die Dispergiermittel D 1 bis D 4 erfolgreich zur Stabilisierung von Titandioxid genutzt werden können. Es wird also eine hohe Feinteiligkeit des Weißpigmentes mit ≤ 10 µm erzielt und die erfindungsgemäßen Dispergiermittel zeigen keine Unverträglichkeit, die sich in Form einer Glanzreduktion oder Schleierbildung äußern würde.

Die vorhergehenden Vergleiche zeichnen die erfindungsgemäß zu verwendenden Verbindungen am Beispiel von D1 bis D4 (jedoch nicht ausschließlich darauf begrenzt) hinsichtlich ihrer universellen Anwendbarkeit auf verschiedenartigen Pigmentoberflächen (oxidische Pigmente, organische Pigmente und Ruße) aus. Erhalten werden auf Basis dieser neuartigen Strukturen niedrigviskose Pigmentpasten mit hoherer Lagerstabilität, hoher Farbtiefentwicklung, niedrigem Rub-Out (sowohl im Fullmixing als auch im Weißlack-Tinting) und selbst empfindliche Systeme werden in ihrer Glanzentwicklung nicht negativ beeinflusst.

## Patentansprüche

1. Verwendung organofunktionell modifizierter, Phenylderivate enthaltender Polysiloxane der allgemeinen Formel (I) 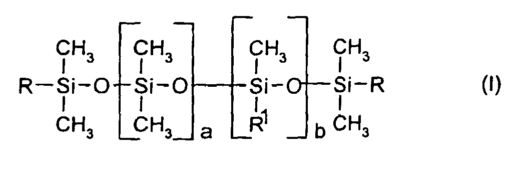 worin bedeuten
R gleich oder verschieden R¹ oder -CH₃
R¹ -(CH₂)_{c}-O -(CH₂-CH(Ph)-O)ₑ -(CₙH₂ₙ₋ₓR²ₓ-O)_{d}- R³ und/oder R^{1'} = -CH₂-CHR*-Ph
R* H oder -CH₃,
R² Alkylrest mit 1 bis 5 C-Atomen, vorzugsweise -CH₃
Ph Phenylderivat mit der allgemeinen Formel
-(C₆H_{5-y}R⁴_{y})-
worin
R⁴ ein Hydroxyrest, ein Alkylrest mit 1 bis 6 Kohlenstoffatomen oder ein Alkoxyrest mit 1 bis 6 Kohlenstoffatomen ist, und
y 0 bis 5,
R³ Wasserstoff, eine Alkylkette mit 1 und bis 18 Kohlenstoffatomen, ein Benzylrest, ein alkylsubstituierter Benzylrest mit bis zu vier Kohlenstoffatomen im Alkylrest, eine COR⁵-Gruppe mit einem Rest R⁵, der eine Alkylkette mit 1 bis 18 Kohlenstoffatomen aufweist, eine CONHR⁶-Gruppe mit einem Rest R⁶, der ein Wasserstoffatom oder eine Alkylkette mit 1 bis 18 Kohlenstoffatomen aufweist, CO₂R⁷, der eine Alkylkette R⁷ mit 1 bis 18 Kohlenstoffatomen,
c 2 bis 6,
d 3 bis 70,
e 0, ≥ 1 ist, mit der Maßgabe, dass, wenn e = 0 ist, der Wert b > 1 und der Rest R¹' mindestens 1 mal im Molekül vorhanden ist,
n 2 bis 4, vorzugsweise 2 oder 3,
x 0 oder 1,
a 0 bis 100,
b 1 bis 100,
mit der Maßgabe, dass die Summe a + b = 1 bis 101 ist, als Dispergier- und Netzmittel für Füllstoffe und Pigmente bei der Herstellung wässriger Pigmentformulierungen, Lacke, Überzüge und Beschichtungen.

2. Verwendung organofunktionell modifizierter, Phenylderivate enthaltender Polysiloxane gemäß Anspruch 1, **dadurch gekennzeichnet, dass** R¹ in Formel (I) der Rest - (CH₂)₂₋₃-O - (CH₂-CH (Ph) -O)₁₋₄ - (C₂H₄-O)₃₋₅₀-H ist.

## Claims

1. Use of organofunctionally modified polysiloxanes containing phenyl derivatives, of the general formula (I) 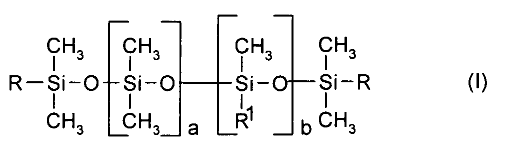 in which
R is in each case identical or different and is R¹ or -CH₃,
R¹ is -(CH₂)_{c}-O -(CH₂-CH(Ph)-O)ₑ -(CₙH₂ₙ₋ₓR²ₓ-O)_{d} - R³ and/or R^{1'} = -CH₂-CHR*-Ph,
R* is H or -CH₃,
R² is an alkyl radical having 1 to 5 carbon atoms, preferably -CH₃,
Ph is a phenyl derivative having the general formula
-(C₆H_{5-y}R⁴_{y})-
in which
R⁴ is a hydroxyl radical, an alkyl radical having 1 to 6 carbon atoms or an alkoxy radical having 1 to 6 carbon atoms, and
y is from 0 to 5,
R³ is hydrogen, an alkyl chain having 1 and up to 18 carbon atoms, a benzyl radical, an alkylsubstituted benzyl radical having up to four carbon atoms in the alkyl radical, a group COR⁵ with a radical R⁵ which has an alkyl chain having 1 to 18 carbon atoms, a group CONHR⁶ with a radical R⁶ which comprises a hydrogen atom or an alkyl chain having 1 to 18 carbon atoms, or CO₂R⁷, which has an alkyl chain R⁷ having 1 to 18 carbon atoms,
c is from 2 to 6,
d is from 3 to 70,
e is 0, ≥ 1, with the proviso that if e is 0 the value of b is > 1 and the radical R^{1'} is present at least once in the molecule,
n is from 2 to 4, preferably 2 or 3,
x is 0 or 1,
a is from 0 to 100,
b is from 1 to 100,
with the proviso that a + b = 1 to 101, as dispersants and wetting agents for fillers and pigments in the production of aqueous pigment formulations, coating materials, and coatings.

2. Use of organofunctionally modified polysiloxanes containing phenyl derivatives, according to Claim 1, **characterized in that** R¹ in formula (I) is the radical -(CH₂)₂₋₃-O - (CH₂-CH(Ph)-O)₁₋₄ - (C₂H₄-O)₃₋₅₀-H.

## Revendications

1. Utilisation de polysiloxanes à modification organofonctionnelle, contenant des dérivés de phényle, de formule générale (I) 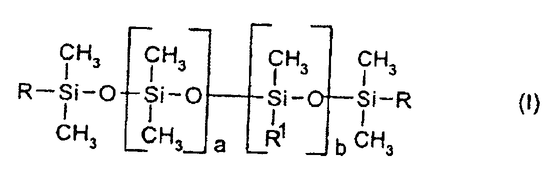 dans laquelle
R identiques ou différents, représentent R¹ ou -CH₃,
R¹ représente - (CH₂)_{c}-O- (CH₂-CH(Ph)-O)ₑ-(CₙH₂ₙ₋ₓR²ₓ-O)_{d}-R³ et/ou R^{1'} = -CH₂-CHR*-Ph
R* représente H ou -CH₃,
R² représente un radical alkyle ayant de 1 à 5 atomes de carbone, de préférence -CH₃
Ph est un dérivé de phényle de formule générale
-(C₆H_{5-y}R⁴_{y})-
dans laquelle
R⁴ est un radical hydroxy, un radical alkyle ayant de 1 à 6 atomes de carbone ou un radical alcoxy ayant de 1 à 6 atomes de carbone, et
y va de 0 à 5,
R³ représente un atome d'hydrogène, une chaîne alkyle ayant de 1 à 18 atomes de carbone, un radical benzyle, un radical benzyle substitué par alkyle, ayant jusqu'à quatre atomes de carbone dans le fragment alkyle, un groupe COR⁵ comportant un radical R⁵ qui comporte une chaîne alkyle ayant de 1 à 18 atomes de carbone, un groupe CONHR⁶ comportant un radical R⁶ qui comporte un atome d'hydrogène ou une chaîne alkyle ayant de 1 à 18 atomes de carbone, un groupe CO₂R⁷ qui comporte une chaîne alkyle R⁷ ayant de 1 à 18 atomes de carbone,
c va de 2 à 6,
d va de 3 à 70,
e est 0, ≥ 1, étant entendu que lorsque e = 0, la valeur b est > 1 et le radical R^{1'} est présent au moins 1 fois dans la molécule,
n va de 2 à 4, est de préférence 2 ou 3,
x est 0 ou 1,
a va de 0 à 100,
b va de 1 à 100,
étant entendu que la somme a + b = 1 à 101,
en tant que dispersant et agent mouillant pour des charges et des pigments dans la production de compositions aqueuses de pigments, de peintures à l'eau, d'enduits à l'eau et de revêtements aqueux.

2. Utilisation de polysiloxanes à modification organofonctionnelle, contenant des dérivés de phényle, selon la revendication 1, **caractérisée en ce que** R¹ dans la formule (I) est le radical -(CH₂)₂₋₃-O-(CH₂-CH(Ph)-O)₁₋₄-(C₂H₄-O)₃₋₅₀-H.
